# EUROPEAN PATENT SPECIFICATION

(11) **EP 2 305 543 B1**
(45) Date of publication and mention of the grant of the patent: **02.12.2015**
(21) Application number: 10251649.9
(22) Date of filing: 24.09.2010
(51) Int. Cl.: B62J 27/00, B60R 21/18

(54) **Airbag system for saddle-ride type vehicle**
Airbagsystem für ein Motorrad
Système d'airbag pour véhicule à monture à selle

(30) Priority: 30.09.2009 JP 2009226625
(43) Date of publication of application: 06.04.2011
(73) Proprietor: Honda Motor Co., Ltd., Minato-ku Tokyo 107-8556 (JP)
(72) Inventor: Kuroki, Kazuyoshi, Wako-shi Saitama 351-0193 (JP); Iijima, Satoshi, Wako-shi Saitama 351-0193 (JP); Suzuki, Kazuhiro, Wako-shi Saitama 351-0193 (JP)
(74) Representative: Stevens, Jason Paul

(56) References cited:
- EP-A2- 1 362 777
- DE-A1-102008 003 766
- JP-A- 2002 137 780

## Description

This invention relates to an airbag system for a saddle-ride type vehicle. An airbag system for a saddle-ride type vehicle such as a motorcycle, which is provided with an airbag which is inflated and deployed between a windscreen of the vehicle and a rider, is known from JP-A No. 2007-069785.

When the saddle-ride type vehicle collides with the side of a moving vehicle such as a car (hereinafter referred to as an "impact vehicle"), the saddle-ride type vehicle is caused to yaw, and is also laterally moved together with the moving impact vehicle. However, the rider of the saddle-ride type vehicle continues to move in his or her original direction, thanks to inertia, and collides with the side of the impact vehicle without being laterally moved. In other words, when the saddle-ride type vehicle collides with the side of a moving vehicle, the travelling direction (moving direction) immediately after the collision of the saddle-ride type vehicle and the moving direction of the rider are different.

Another airbag system is known from DE-A-102008003766.

In the above-mentioned known types of airbag systems the airbag system is an in-vehicle airbag deployed between the rider and the windscreen of the vehicle to reduce impact, the airbag system is hardly influenced by yawing. That is, as the known airbag is deployed between the rider and the windscreen of the vehicle and acts on the rider at an early point during the collision, at which point the yawing is small, the airbag can absorb the kinetic energy of the rider without being influenced so much by the yawing. However, to use an in-vehicle airbag, certain vehicular conditions such as a large space in front of a rider are required.

If an airbag which is deployed between an impact vehicle and a rider and which fulfils buffer action is not configured as an in-vehicle airbag, the above-mentioned vehicular conditions can be relieved (for example, a windscreen is not required to be provided).

However, the airbag deployed between the impact vehicle and the rider acts on the rider at a later point during the collision, compared with the in-vehicle airbag, and so the yawing has more effect.

It is an object of at least the preferred embodiments of the present invention to provide an airbag system for a saddle-ride type vehicle that can fulfil its role even if the saddle-ride type vehicle collides with the side of a moving impact vehicle and yawing is caused.

According to a first aspect of the present invention, there is provided an airbag system for a saddle-ride type vehicle comprising an airbag to be inflated and deployed upward from the vehicle in front of a rider, wherein the airbag is provided with a part opposite to a head opposite to a rider's head when inflated and deployed, and a neck part which rises upward from the vehicle and toward the part opposite to the head, wherein the width of the neck part is smaller than the width of the part opposite to the head, and wherein the neck part has a necking curved inside in the direction of vehicle width.

According to this aspect of the present invention, the following actions and effects are acquired.

As described above, when a saddle-ride type vehicle collides with the side of a moving impact vehicle, the saddle-ride type vehicle is ordinarily turned in a travelling direction of the impact vehicle (so that yawing is caused and the saddle-ride type vehicle is laterally moved by the impact vehicle). In the meantime, as described above, the rider of the saddle-ride type vehicle continues to move in a travelling direction before the collision according to inertia, and thus collides with the side of the impact vehicle.

According to this aspect of the present invention, the airbag is provided with the part opposite to the head, which is opposite to the rider's head when the airbag is inflated and deployed, and the neck part which rises upward from the vehicle and toward the part opposite to the head, the width of which is smaller than that of the part opposite to the head. Further, the airbag has concave neckings curved inside in the direction of vehicle width. As a result, the neck part and the part opposite to the head are inflated and deployed, and the neckings of the neck part avoid interference from the vehicle. Therefore, even if the saddle-ride type vehicle collides with the side of the moving impact vehicle and is turned in the travelling direction of the impact vehicle, the airbag is inflated and deployed in substantially the same direction as the travelling direction before the collision.

The airbag is inflated and deployed immediately after collision. Ordinarily, the saddle-ride type vehicle is turned in the same direction as the impact vehicle immediately after impact, and the rider continues in the travelling direction before the collision and collides with the side of the impact vehicle instead of the airbag. However, as the neckings prevent interference from the vehicle on the airbag, the airbag is not moved even though the vehicle is moved.

Therefore, a position of the part opposite to the head in the inflated and deployed airbag is easily matched with a moving direction of the rider according to inertia.

Accordingly, even if the saddle-ride type vehicle collides with the side of a moving impact vehicle, the airbag can fulfil its role.

An upper part of the part opposite to the head is wider than a lower part of the part opposite to the head when the airbag is inflated and deployed.

As a result, as the airbag can more securely avoid interference from the vehicle and is hardly moved by movement of the vehicle, the position of the part opposite to the head is easily matched with the moving direction of the rider. The entire airbag is reduced in size by making the lower part of the part opposite to the head narrower than the upper part, and at the same time, a rider protecting function can be enhanced by making the upper part of the part opposite to the head relatively wider.

The part opposite to the head is entirely located in front of the handlebar provided on the vehicle when the airbag is inflated and deployed.

As a result, the airbag can more securely avoid interference from the vehicle, particularly from the handlebar, and is hardly moved when the vehicle is moved. Further, the position of the part opposite to the head can be easily matched with the moving direction of the rider.

Preferably, the part opposite to the head is located above a handlebar provided on the vehicle when the airbag is inflated and deployed.

As a result, as the airbag can more securely avoid interference from the vehicle, particularly from the handlebars, and is hardly moved when the vehicle is moved, the position of the part opposite to the head is easily matched with the inertial moving direction of the rider.

Preferably, a pair of right and left mooring bodies that couple the part opposite to the head to the vehicle separately from the neck part and moor the part opposite to the head when the airbag is inflated and deployed are provided.

As a result, even if there is nothing (such as the impact vehicle) to support the airbag immediately in front of the inflated and deployed airbag, the airbag can still receive the rider and can still absorb a part of rider's kinetic energy.

Preferably, the mooring bodies are coupled to an airbag module mounted in the vehicle which houses the airbag and an inflator that inflates and deploys the airbag, on both sides of the vehicle.

As a result, a degree of freedom in the design of the other body parts is enhanced, compared with a case where the mooring bodies are coupled to the vehicle body.

Preferably, the right and left mooring bodies are coupled to the right and left sides of the part opposite to the head.

Then, even if there is nothing (such as the impact vehicle) to support the airbag in front of the inflated and deployed airbag, the airbag still receives the rider and can still absorb a part of rider's kinetic energy.

The invention also extends to a saddle-ride type vehicle with an airbag system as described above.

Preferred embodiments of the invention will now be described by way of example only and with reference to the accompanying drawings, in which:
Fig. 1 is a side view showing a saddle-ride type vehicle using one embodiment of the airbag system according to the present invention;
Fig. 2 is a schematic diagram showing the vehicle viewed from the back;
Fig. 3 is a side view showing a steering unit;
Fig. 4 is a side view showing the motorcycle when the airbag is inflated and deployed;
Fig. 5 is a schematic diagram showing the vehicle viewed from the back with the airbag inflated and deployed;
Figs. 6 illustrate the operation of an interlocking device, Fig. 6(a) is a plan view, and Fig. 6(b) shows the vehicle shown in Fig. 6(a) viewed from the back;
Fig. 7 is a side view showing a state of collision;
Fig. 8 is a plan view showing a state of collision which illustrates a problem of the prior art;
Fig. 9 is a plan view showing a state of collision which illustrates the action of the invention;
Figs. 10 show a main part of the airbag system in third-angle projection, Fig. 10(a) is a plan view, Fig. 10(b) is a side view of Fig. 10(a), and Fig. 10(c) is a view from the back of the vehicle;
Fig. 11 is a sectional view showing a state in which the airbag 30 and an inflator 32 are housed in a body of a retainer;
Fig. 12 is a perspective view showing one embodiment of an airbag module;
Fig. 13(a) is a side view showing the airbag module in its closed state and Fig. 13(b) is a side view showing a state in which a lid is open;
Figs. 14 show a saddle-ride type vehicle using another embodiment, Fig. 14(a) is a side view, and Fig. 14(b) shows the vehicle viewed from the back;
Fig. 15(a) is an explanatory drawing for explaining action and Fig. 15(b) shows a comparative embodiment;
Fig. 16 is a side view showing a saddle-ride type vehicle using a further embodiment;
Fig. 17 is an explanatory drawing for explaining action;
Figs. 18(a) to 18(c) are explanatory drawings showing means for differentiating the internal pressure of plural expansion chambers 31f, 31r;
Fig. 19(a) is a side view showing a saddle-ride type vehicle using another embodiment and Fig. 19(b) is a sectional view viewed along a line b-b in Fig. 19(a); and
Fig. 20(a) is a front view showing an embodiment in which a protective sheet 35 is mounted, Fig. 20(b) is a side sectional view of Fig. 20(a), Fig. 20(c) is a front view showing another embodiment in which the protective sheet 35 is mounted, and Fig. 20(d) is a side view of Fig. 20(c).

Referring to the drawings, embodiments of an airbag system for a saddle-ride type vehicle according to this invention will be described below.

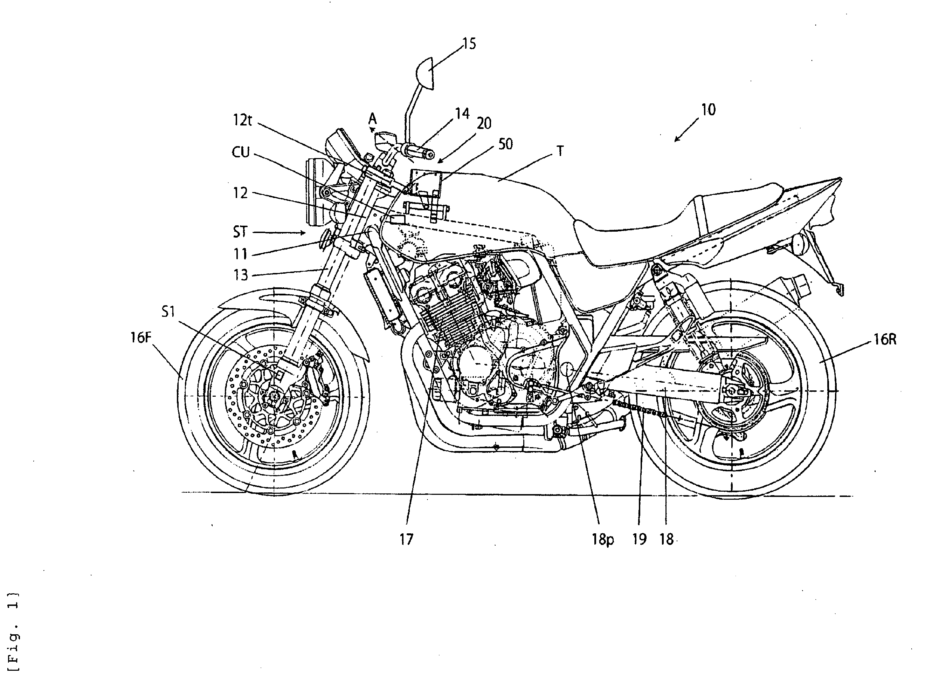

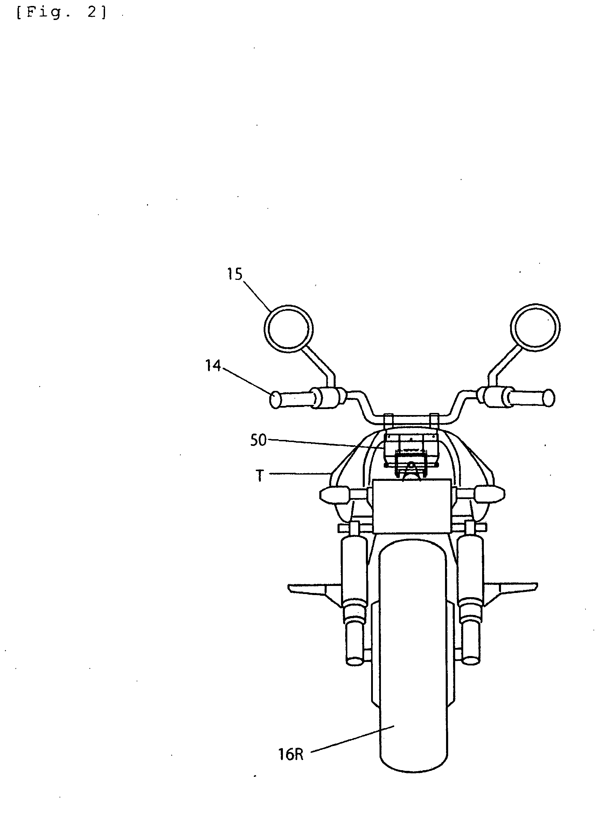

Fig. 1 is a side view showing a saddle-ride type vehicle using one embodiment of the airbag system for a saddle-ride type vehicle according to the present invention and Fig. 2 shows the vehicle viewed from the back.

The vehicle 10 shown in Figs. 1 and 2 is a motorcycle, which is provided with a frame (a body frame) 11. A pair of right and left front forks 13 is steerably attached to a head pipe 12 at a front end of the body frame 11, and a handlebar 14 is attached to the upper end of the front forks 13. A rear view mirror 15 is attached to the handlebar 14. A front wheel 16F is rotatably attached to a lower end of the front fork 13. An engine 17 is fixed to the body frame 11. A swing arm 18 is vertically swingably attached to the rear of the body frame 11 via a pivot 18p and a rear wheel 16R which is a driving wheel is rotatably attached to a rear end of the swing arm 18. The rear wheel 16R is driven via a chain 19 provided between the rear wheel and the engine 17.

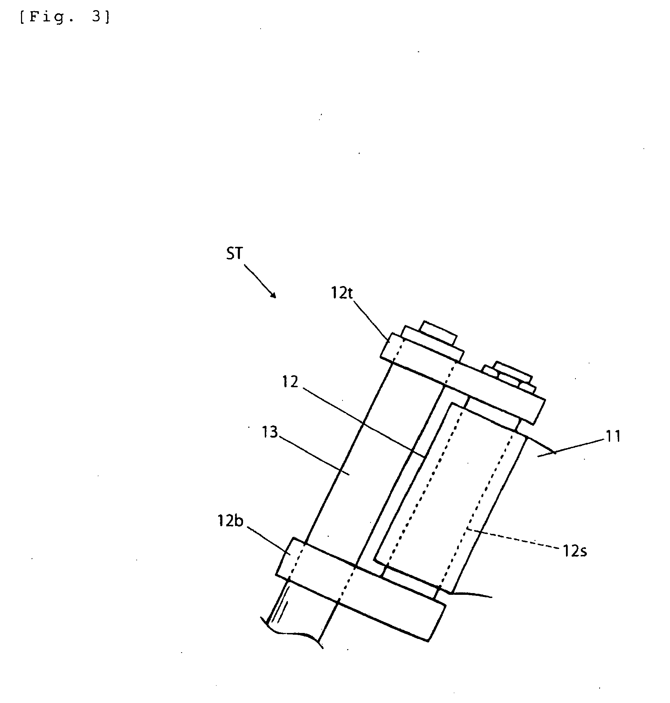

A steering unit ST in the motorcycle 10 can be configured using a well-known basic structure. The steering unit ST can be configured by rotatably supporting a stem shaft 12s by the head pipe 12 as shown in Fig. 3 for example, connecting a top bridge 12t and a bottom bridge 12b to an upper part and a lower part of the stem shaft 12s, supporting the pair of front forks 13 with the top bridge 12t and the bottom bridge 12b, rotatably attaching the front wheel 16F to the lower ends of the front forks 13 and fixing the handlebar 14 (see Fig. 1) to the top bridge 12t.

The above-mentioned steering unit ST can change a course of the motorcycle 10 clockwise or anticlockwise in plan view when a rider turns the handlebar 14.

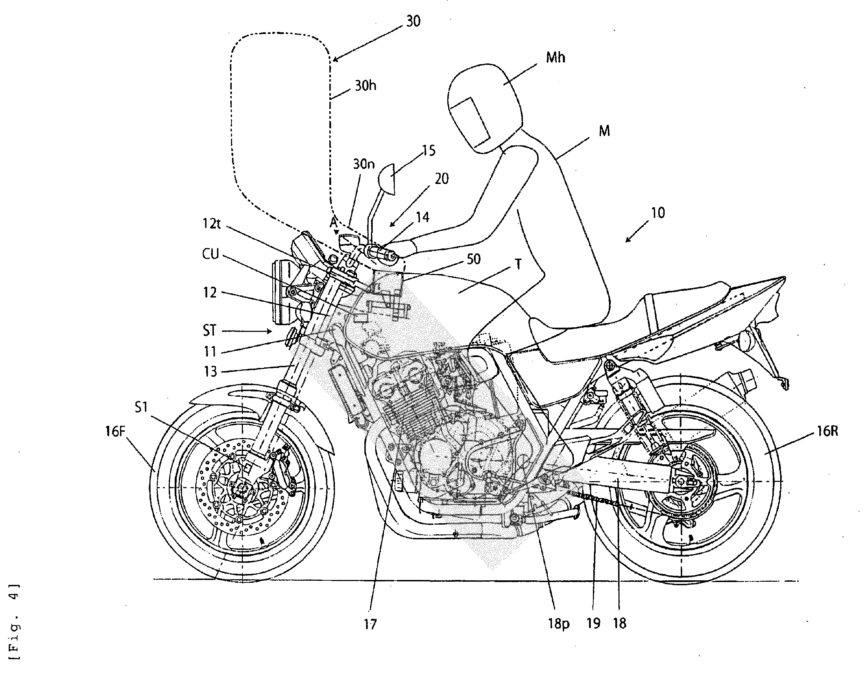

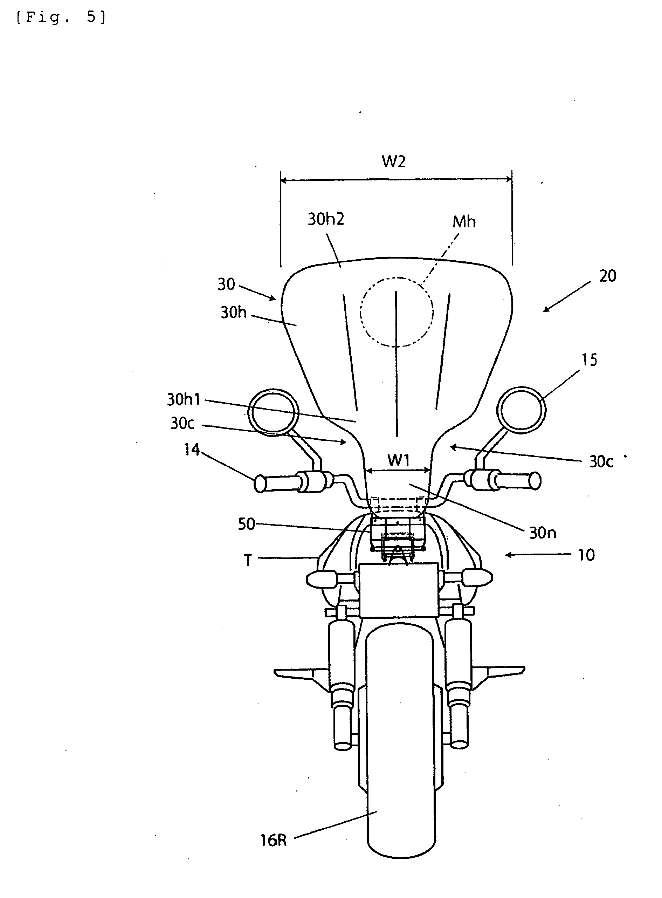

Fig. 4 is a side view of the motorcycle 10 showing a state in which an airbag is inflated and deployed and Fig. 5 shows the motorcycle viewed from the back.

As shown in Figs. 4 and 5, the airbag system 20 is mounted at the front of a fuel tank T in the motorcycle 10.

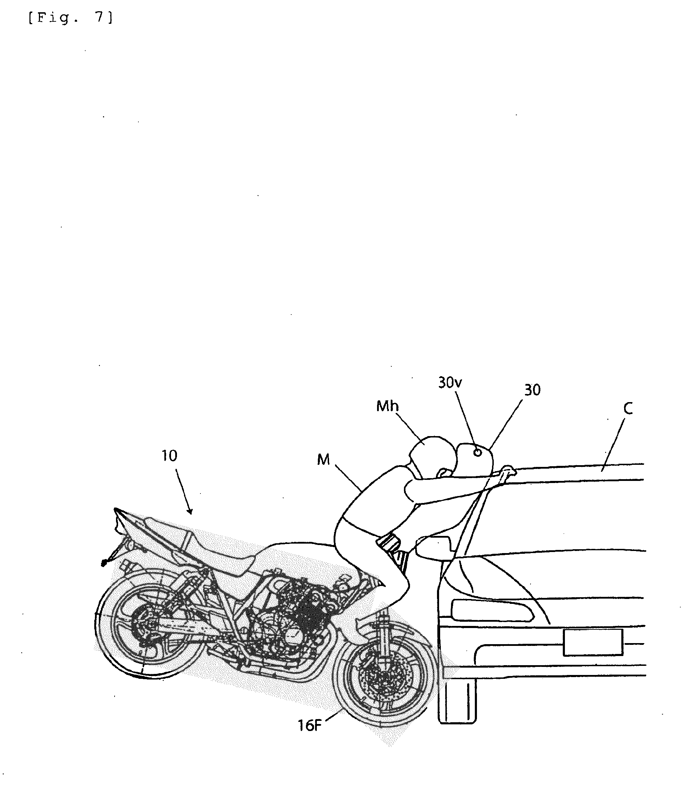

The airbag system 20 is provided with the airbag 30 which is to be inflated and deployed upward from the vehicle 10 in front of the rider M in collision with an impact vehicle C, as shown in Fig. 7.

As shown in Figs. 4 and 5, the airbag 30 is provided with a part opposite to the head 30h, which is opposite to the head Mh of the rider M when the airbag is inflated and deployed. The airbag also includes a neck part 30n which rises upward from the vehicle 10 and toward the part opposite to the head 30h, and the width W of the neck part 30n is less than the width W2 of the part opposite to the head 30h. Further, the neck part 30n which has concave neckings 30c curved inside in the direction of vehicle width.

When the airbag is configured as described above, the following actions and effects are acquired.

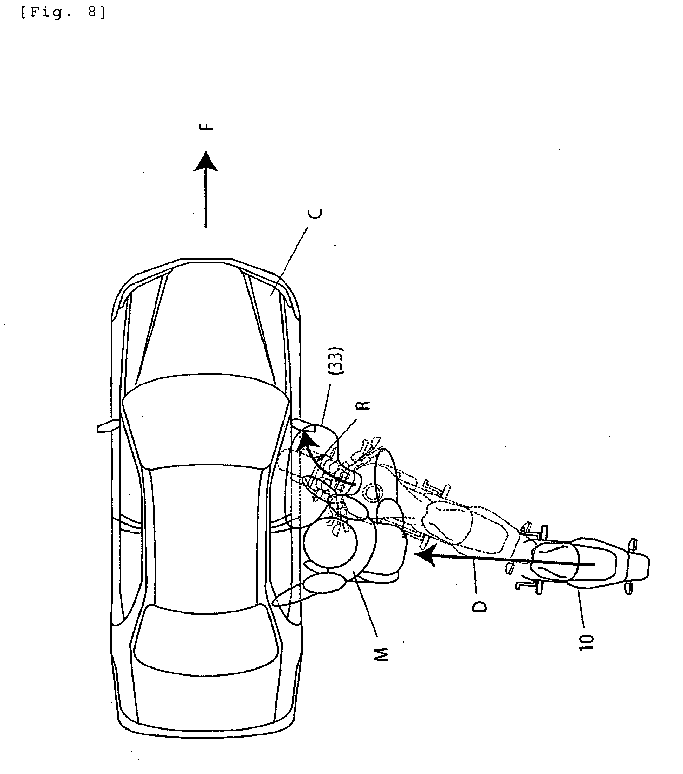

When the saddle-ride type vehicle 10 collides with the side of the moving impact vehicle C as shown in Fig. 7, the saddle-ride type vehicle 10 is usually turned in a travelling direction F of the impact vehicle C (such that yawing is caused and the vehicle is moved sideways by the impact vehicle C) due to the collision with the impact vehicle C as shown in Fig. 8. In other words, even though the travelling direction of the saddle-ride type vehicle before the collision is D, the saddle-ride type vehicle 10 is moved laterally (in a direction shown by an arrow R in Fig. 8) in the travelling direction of the impact vehicle C due to the collision with the impact vehicle C.

However, as described above, the rider M of the saddle-ride type vehicle 10 continues to move in the travelling direction D (without being moved laterally), as a result of inertia, and collides with the side of the impact vehicle C.

With the above-mentioned known airbag system for a saddle-ride type vehicle, which is an in-vehicle airbag which relieves shock by deploying the airbag between the rider and the windscreen of the vehicle, the airbag system is hardly influenced by the yawing. That is, as the known airbag is deployed between the rider and the windscreen of the vehicle and acts on the rider at an early point in the collision when yawing is small, the airbag can absorb the kinetic energy of the rider without being influenced so much by the yawing. However, to use an in-vehicle airbag, certain vehicular conditions such as a large space in front of the rider are required.

If an airbag 30 which is deployed between an impact vehicle C and a rider M and which fulfils buffer action is used, as in the present embodiment for example, the above-mentioned vehicular conditions can be relieved (for example, no windscreen is required to be provided).

However, as the timing of the action on the rider M of the airbag 30 deployed between the impact vehicle C and the rider M is slower than with the in-vehicle airbag, the yawing has more effect.

According to the airbag system 20 in this embodiment, as shown in Fig. 5, the airbag 30 is provided with a part opposite to the head 30h, which is opposite to the head Mh of the rider M when the airbag is inflated and deployed, and a neck part 30n which rises upward from the vehicle 10 and toward the part opposite to the head 30h. The width W1 of the neck part 30n is less than the width of the part opposite to the head 30h. The neck part 30n has the concave neckings 30c curved inside in the direction of vehicle width, and the neck part 30n and the part opposite to the head 30h are inflated and deployed, with the neck part 30n having the neckings 30c avoiding interference from the vehicle 10 as shown in Fig. 5 when the airbag system is inflated and deployed.

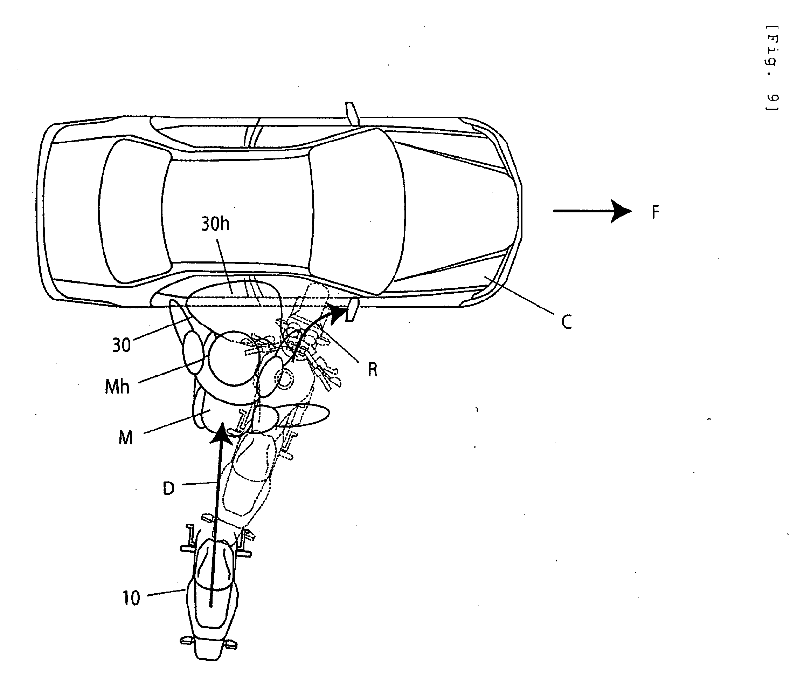

Therefore, even if the saddle-ride type vehicle 10 collides with the side of the moving impact vehicle C and is turned in the travelling direction of the impact vehicle C, as shown in Fig. 9, the airbag 30 is inflated and deployed in substantially the same direction as the travelling direction D before the collision.

That is, the airbag 30 is inflated and deployed immediately after the collision, the saddle-ride type vehicle 10 is turned in the same direction as the vehicle C immediately after the inflation and deployment, and the rider M comes to collide with the side of the impact vehicle C in the travelling direction D before the collision; however, at that time, the neck part 30n having the neckings 30c can avoid interference from the vehicle 10 as a result of the neckings 30c. For example, even if the saddle-ride type vehicle 10 is laterally moved in Fig. 5, the vehicle body (the handlebar 14 in Fig. 5) hardly abuts on the neck part 30n because of the existence of the neckings 30c. As a result, the airbag 30 is hardly moved, even though the vehicle 10 is.

Therefore, as shown in Fig. 9, a position of the part opposite to the head 30h in the inflated and deployed airbag 30 is easily matched with the moving direction D of the rider M according to inertia.

Accordingly, witch this airbag system 20, even if the saddle-ride type vehicle collides with the side of the moving impact vehicle C, the airbag 30 can fulfil its role.

As shown in Figs. 4 and 5, the airbag 30 and the handlebar 14 are configured so that the part opposite to the head 30h is located above the handlebar 14, because the neck part 30n rises when the airbag is inflated and deployed.

As a result, the airbag 30 can more securely avoid interference from the vehicle, particularly from the handlebar 14, and hardly moves even if the vehicle 10 is moved. Therefore, the position of the part opposite to the head 30h is more easily matched with the moving direction D of the rider M.

As shown in Fig. 5, the part opposite to the head 30h is configured so that an upper part 30h2 is wider than a lower part 30h1 when the airbag is inflated and deployed. The airbag 30 is fan-shaped overall including the neck part 30n.

As a result, the airbag 30 can more securely avoid interference from the vehicle 10 and is hardly moved when the vehicle 10 is moved. Therefore, the position of the part opposite to the head 30h is more easily matched with the moving direction D of the rider M. The whole airbag 30 can be made compact both by narrowing the width of the lower part 30h1 of the part opposite to the head 30h (compared with the width of the upper part 30h2), and by providing the necking 30c. At the same time, a rider protecting function can be enhanced by relatively increasing the width of the upper part 30h2 of the part opposite to the head 30h.

As shown in Fig. 4, the part opposite to the head 30h is located in front of the handlebar 14 when the airbag is inflated and deployed.

As a result, the airbag 30 can more securely avoid interference from the vehicle, particularly from the handlebar 14, and is hardly moved when the vehicle is moved. Therefore, the position of the part opposite to the head 30h is more easily matched with the moving direction of the rider.

The airbag system 20 in this embodiment is provided with an interlocking device 40 between the steering unit ST and the airbag 30. A specific example of the configuration of the interlocking device 40 will be described later. The interlocking device 40 is a device for determining a direction in which the airbag 30 is inflated and deployed according to a state of the steering unit ST in collision with the impact vehicle C (more precisely, immediately after collision), that is, when the airbag 30 is inflated and deployed.

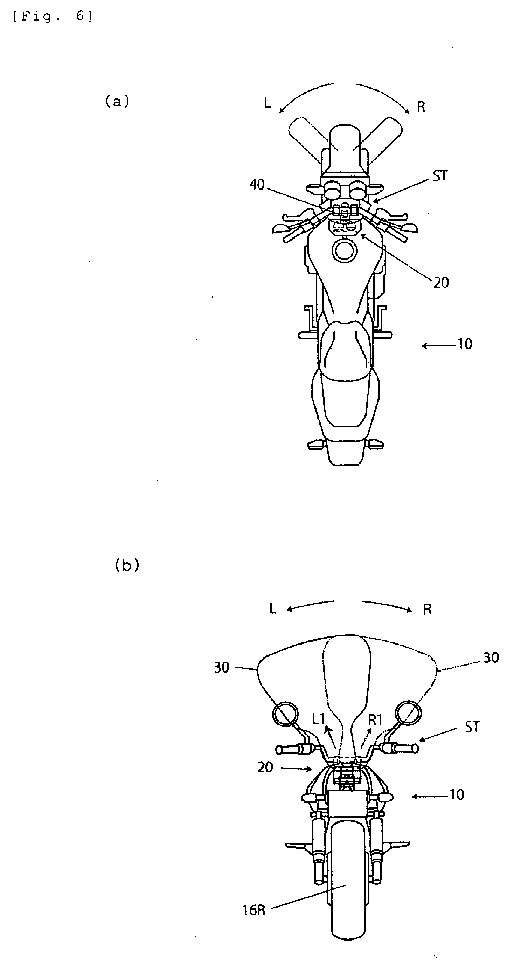

Specifically, when the airbag 30 is inflated and deployed, the interlocking device 40 makes the airbag 30 inflate and deploy anticlockwise L (the inflating and deploying direction is shown by an arrow L1) when viewed from the back of the vehicle 10, as shown by a full line in Fig. 6(b), if the steering unit ST directs the vehicle 10 clockwise in plan view, that is, if the steering unit ST is turned clockwise R, as shown by a full line in Fig. 6(a). In addition, if, when the airbag 30 is inflated and deployed, the steering unit ST directs the vehicle 10 anticlockwise L in plan view, as shown by a dotted line in Fig. 6(a), that is, the steering unit ST is turned anticlockwise L, the interlocking device makes the airbag 30 inflate and deploy clockwise R when viewed from the back of the vehicle (the inflating and deploying direction is shown by an arrow R1), as shown by a dotted line in Fig. 6(b).

As a result, the following actions and effects are acquired.

When the saddle-ride type vehicle 10 collides with the side of the moving impact vehicle C as shown in Fig. 7, the front wheel 16F of the saddle-ride type vehicle 10 is turned in the travelling direction F of the impact vehicle C due to the collision with the impact vehicle C as shown in Fig. 8. Accordingly, as shown in Fig 6(a), the steering unit ST is also turned in the same direction (in a direction shown by an arrow R in Fig. 8), and at the same time, the saddle-ride type vehicle 10 itself is also turned in the travelling direction of the impact vehicle (yawing is caused and the saddle-ride type vehicle is moved sideways by the impact vehicle C). That is, the saddle-ride type vehicle 10 is laterally moved in the travelling direction of the impact vehicle C, apart from the travelling direction D before the collision, due to collision with the impact vehicle C.

However, as described above, the rider M of the saddle-ride type vehicle 10 continues to move in the travelling direction D before the collision, without being laterally moved, according to inertia, and collides with the side of the impact vehicle C.

As described above, when the airbag 30 which is deployed between the impact vehicle C and the rider M and fulfils buffer action is used as in this embodiment, the yawing must be taken more into consideration because the timing of the action on the rider M of the airbag 30 is slower, compared with the in-vehicle airbag.

According to the airbag system 20 in this embodiment, as shown in Figs. 6, if the steering unit ST of the saddle-ride type vehicle 10 directs the vehicle 10 clockwise R in plan view immediately after collision (that is, when the airbag 30 is inflated and deployed), the airbag 30 is directed anticlockwise L in a view from the back of the saddle-ride type vehicle 10 and is inflated and deployed upward (in the direction shown by the arrow L1) from the vehicle 10 by the operation of the interlocking device 40. The inflated and deployed position is matched with the moving direction D of the rider M according to inertia (see Fig. 9).

Figs. 8 and 9 show a state in which the impact vehicle C advances rightward in plan view. It will be appreciated that when the saddle-ride type vehicle collides with the impact vehicle C advancing leftward, the steering unit ST is turned leftward L. That is, as shown in Figs. 6, if the steering unit ST of the saddle-ride type vehicle 10 directs the vehicle 10 anticlockwise L in plan view when the airbag 30 is inflated and deployed immediately after collision, the airbag 30 is directed clockwise R in the view from the back of the saddle-ride type vehicle 10 by the operation of the interlocking device 40, and is inflated and deployed upward (in the direction shown by the arrow R1) from the vehicle 10. The inflated and deployed position is also matched with the moving direction of the rider according to inertia.

Accordingly, with the airbag system 20 of the saddle-ride type vehicle, even if the saddle-ride type vehicle 10 collides with the side of the moving impact vehicle C, the airbag 30 can fulfil its role. The airbag 30 satisfactorily fulfils its function owing to the above-mentioned configuration (see Figs. 4 and 5) of the airbag 30 and the above-mentioned unction of the interlocking device 40.

Figs. 8 and 9 show a state in which the travelling direction D of the saddle-ride type vehicle 10 is slightly inclined to the travelling direction F of the impact vehicle C. However, even if the travelling direction D of the saddle-ride type vehicle 10 is perpendicular to the travelling direction F of the impact vehicle C, a similar phenomenon occurs. Further, when the travelling direction D of the saddle-ride type vehicle 10 is inclined to a collision surface of an object of collision, even if the object of collision such as the impact vehicle C is not moving, the turning of the steering unit ST also occurs.

Accordingly, in such a case, according to the airbag system 20 of the saddle-ride type vehicle, the airbag 30 can also fulfil its role.

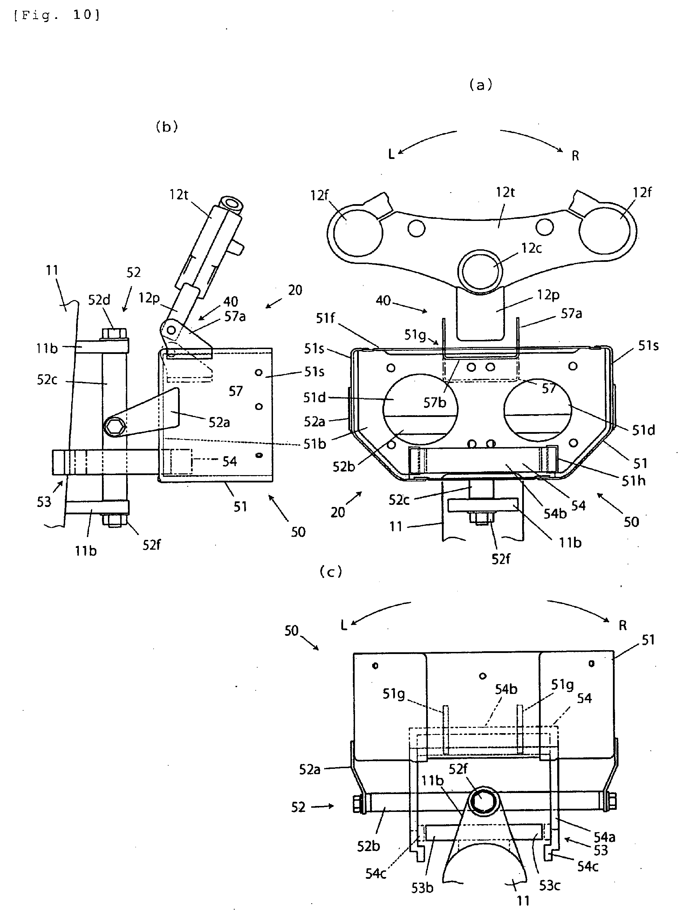

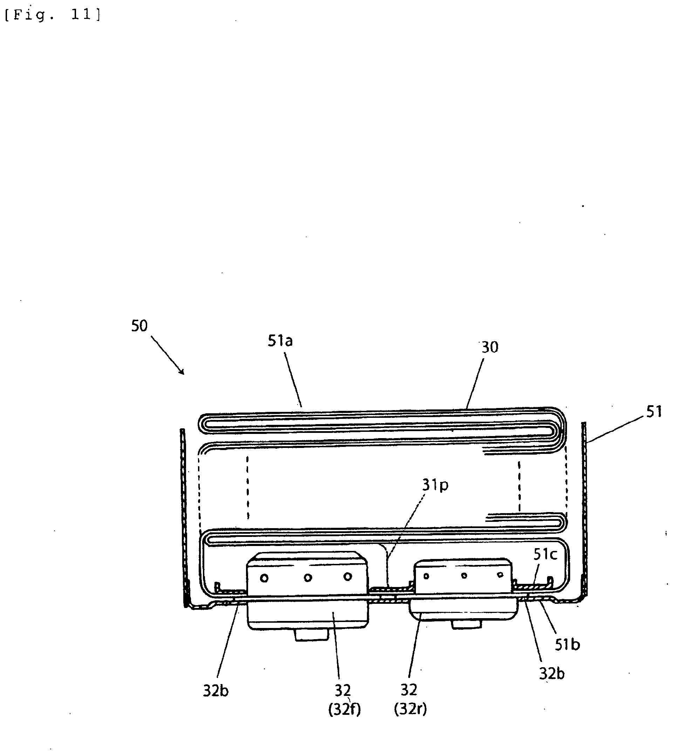

Figs. 10 show a main part of the airbag system 20 in third-angle projection. Fig. 10(a) is a plan view, Fig. 10(b) is a side view of Fig. 10(a), and Fig. 10(c) is a view from the back of the vehicle of Fig. 10(a). Fig. 11 is a sectional view showing a state in which the airbag 30 and an inflator 32 are housed in a body of a retainer.

The airbag system 20 is provided with the airbag 30, the retainer 50 that houses the airbag 30, and the interlocking device 40.

The retainer 50 includes the box-type body 51 of the retainer, a supporting mechanism 52 that attaches the body 51 of the retainer to the vehicle 10 so that it is rotatable clockwise R and anticlockwise L in the view from the back of the vehicle 10 as shown in Fig. 10(c), and a locking mechanism 53 that locks the turning of the body 51 of the retainer by the supporting mechanism 52.

The body 51 of the retainer is a case provided with an opening 51a (see Fig. 11) for inflating and deploying the airbag on the upper side, and an installation hole 51d for attaching the inflator 32 is provided in a bottom plate 51b. As shown in Fig. 11, the inflator 32 is fixed to the body 51 of the retainer by fixing its flange 32b with a keep plate 51c.

As shown in Fig. 11, the airbag 30 is housed integrally with the inflator 32 in a state in which the airbag is folded in the body 51 of the retainer.

As shown in Fig. 1, a shock sensor S1 is installed in the right and left front forks 13 and a control unit CU is mounted in front of the retainer 50. The shock sensor S1 is electrically connected to the control unit CU and the control unit CU is electrically connected to the inflator 32. When a collision occurs, the shock sensor S1 transmits detected deceleration data to the control unit CU and the control unit CU judges whether the airbag 30 should be operated or not based upon the deceleration data. When the control unit judges that the airbag should be operated, it feeds current for ignition to the inflator 32 so as to operate the inflator 32 and generate gas in the airbag 30 and thus inflates and deploys the airbag 30.

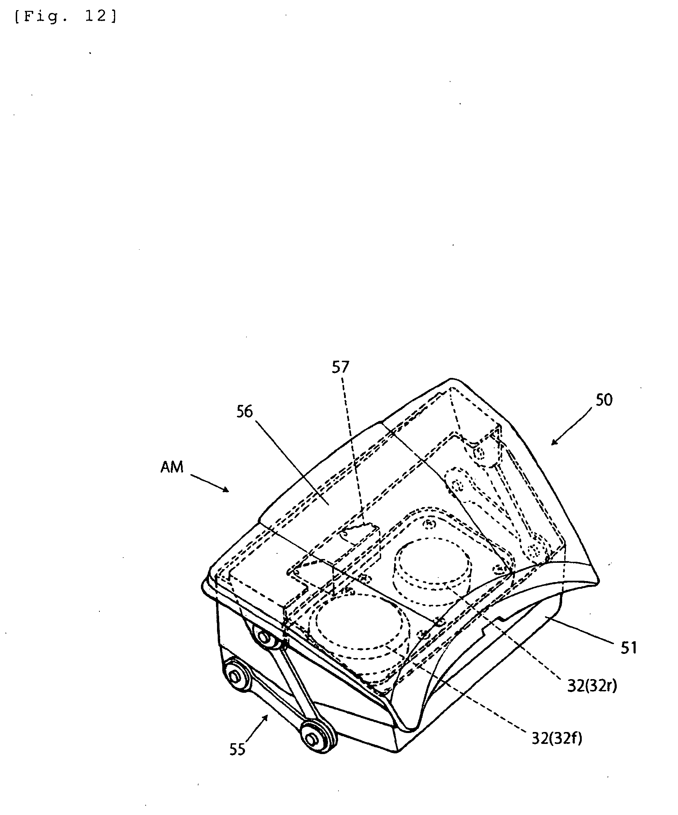

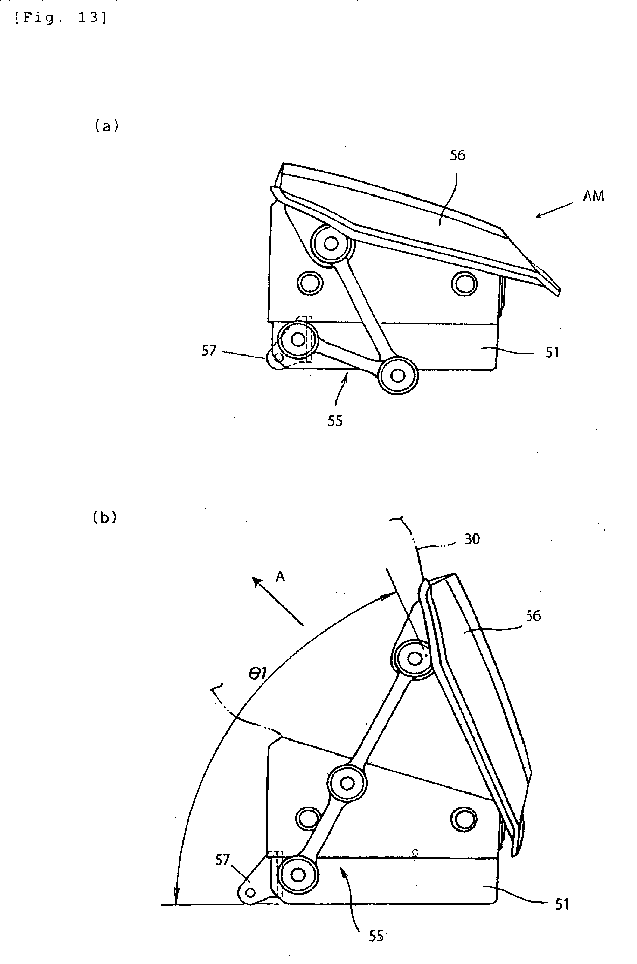

The body 51 of the retainer can be configured as an airbag module AM provided with a lid 56 equipped with a link 55 shown in Figs. 12 and 13. When the airbag system 20 is not operated, the lid 56 is closed as shown in Figs. 12 and 13(a). However, when the airbag 30 is inflated by the operation of the inflator 32, the lid 56 is forced to open as shown in Fig. 13(b) by the pressure, and the airbag 30 is inflated and deployed forward and upward as shown by an arrow A. At that time, an opening angle θ1 of the lid 56 is defined by the extension of the link 55 as shown in Fig. 13(b) and thus an inflation/deployment angle of the airbag 30 is defined. The inflated and deployed airbag 30 receives the rider M and protects the rider M by effectively absorbing the kinetic energy of the rider, exhausting gas from an exhaust hole (see 30v in Fig. 7) and deflating.

The contours of the body 51 of the retainer shown in Figs. 10 and the contours of the body 51 of the retainer shown in Figs. 12 and 13 are different. Any suitable contour can be used.

As shown in Figs. 10, the supporting mechanism 52 of the body 51 of the retainer is provided with right and left arms 52a projecting downwardly from right and left side boards of the body 51 of the retainer, a rod 52b that couples the right and left arms 52a, a pipe 52c fixed integrally with the rod 52b with the pipe 52c perpendicular to the rod 52b, a pair of brackets 11b provided to the body frame 11, and a bolt 52d and a nut 52f that rotatably support the pipe 52c inside each bracket 11b. The bolt 52d is inserted into the pipe 52c and the nut 52f is connected to its end. The pipe 52c extends in a longitudinal direction of the vehicle 10, and can be turned around the bolt 52d. The body 51 of the retainer, the arms 52a and the rod 52b are turned integrally with the pipe 52c. Accordingly, the body 51 of the retainer can be turned clockwise R and anticlockwise L in the view from the back of the vehicle 10 relative to the vehicle 10 as shown in Fig. 10(c).

The locking mechanism 53 is provided to prevent the turning of the body 51 of the retainer by the supporting mechanism 52 when the airbag system 20 is not operated.

The locking mechanism 53 is provided with a regulating body 53b provided on the body of the vehicle and a regulated body 54 provided on the body 51 of the retainer.

The regulating body 53b is configured by a regulating block fixed to the body frame 11 and both of its ends 53c form a regulating part that can contact the regulated body 54.

The regulated body 54 is formed as a U-shaped plate member in the view from the back as shown in Fig. 10(c). The regulated body 54 is provided with a pair of arms 54a projecting toward the regulating body 53b and a base 54b that couples the upper parts of these arms 54a in the body 51 of the retainer. The arms 54a project downward from the body 51 of the retainer, and pass through holes 51h formed in the bottom plate 51b of the body 51 of the retainer.

A well-known temporary fastening means (not shown) for preventing the protrusion of the regulated body 54 when the airbag system 20 is not operated is provided between the body 51 of the retainer and the regulated body 54. As a result, the regulated body 54 is temporarily held in a position in which the ends 54c of the arms 54a of the regulated body 54 are opposite to a regulating part 53c of the regulating body 53b, as shown by a dotted line in Figs. 10, when the airbag system 20 is not operated. In this state, as the ends 54c of the arms 54a of the regulated body 54 contact the regulating part 53c of the regulating body 53b if the body 51 of the retainer tries to turn around the pipe 52c, the rotation of the body 51 of the retainer is prevented.

When the airbag system 20 is operated, the inflator 32 is operated as described above and the airbag 30 is inflated and deployed upward (more precisely, upward and forward) from the opening 51a of the body 51 of the retainer. Further, force in a direction in which the regulated body 54 is protruded from the body 51 of the retainer acts on the regulated body 54, as a result of the rise of pressure in the body 51 of the retainer and the inflating of the airbag 30 at this time. The temporary holding of the regulated body 54 by the temporary fastening means is released by this force and the regulated body 54 protrudes into the state as shown by full lines in Figs. 10. The locked state, in which the ends 54c of the arms 54a of the regulated body 54 and the regulating part 53c of the regulating body 53b are opposite each other, is released by the protrusion, and the body 51 of the retainer can be turned around the pipe 52c.

As shown in Figs. 10, the interlocking device 40 is provided with an operating part 12p provided to the steering unit ST and an engaging part 57 which is provided to the retainer 50 and can be engaged with the operating part 12p.

The operating part 12p is configured as a projecting portion provided on a top bridge 12t forming a part of the steering unit ST. In Fig. 10(a), a reference sign 12f denotes a hole in which the front fork 13 is fitted and 12c denotes a hole in which the stem shaft 12s is fitted.

The engaging part 57 is formed by an engaging member made of a U-shaped plate in plan view as shown in Fig. 10(a). The engaging member 57 is provided with a pair of arms 57a extending toward the operating part 12p and a base 57b that couples the bases of these arms 57a in the body 51 of the retainer. The engaging member 57 is attached to the body 51 of the retainer by inserting the arms 57a into holes 51g provided in a front plate 51f of the body 51 of the retainer. The arms 57a can project forwardly from the body 51 of the retainer.

A well-known temporary fastening means (not shown) for preventing the protrusion of the engaging member 57 when the airbag system 20 is not operated is provided between the body 51 of the retainer and the engaging member 57. The engaging member 57 is thereby temporarily held in a position in which the arms 57a of the engaging member 57 are not fitted to the operating part 12p as shown by dotted lines in Figs. 10 when the airbag system 20 is not operated. In this state, as the arms 57a of the engaging member 57 do not engage with the operating part 12p even if the steering unit ST and thus the operating part 12p is turned, the body 51 of the retainer is not turned.

When the airbag system 20 is operated, the inflator 32 is operated as described above and the airbag 30 is inflated and deployed upward from the opening 51a of the body 51 of the retainer. A force in a direction in which the engaging member is protruded from the body 51 of the retainer acts on the engaging member 57 as a result of the rise of pressure in the body 51 of the retainer and the inflation of the airbag 30 at this time. The temporary holding of the engaging member 57 by the temporary fastening means is released by this force, and the engaging member 57 is made to protrude as shown by full lines in Figs. 10. The arms 57a of the engaging member 57 can engage with the operating part 12p as a result of this protrusion, and the body 51 of the retainer can be turned around the pipe 52c in interlock with the turning of the steering unit ST.

Thus, the interlocking device 40 directs the airbag 30 anticlockwise L as shown in Fig. 6(b) in the view from the back of the vehicle and inflates and deploys the airbag by turning the retainer (the body 51 in this case) anticlockwise L as shown in Fig. 10(c) in the view from the back of the vehicle if the steering unit ST directs the vehicle 10 clockwise R as shown in Fig. 6(a) and Fig. 10(a) in plan view when the airbag 30 is inflated and deployed. Further, if the steering unit ST directs the vehicle 10 anticlockwise L as shown in Figs. 6(a) and 10(a) in the plan view when the airbag is inflated and deployed, the interlocking device directs the airbag 30 clockwise R as shown in Fig. 6(b) in the view from the back of the vehicle 10 by turning the body 51 of the retainer clockwise R as shown in Fig. 10(c) in the view from the back of the vehicle and inflates and deploys the airbag.

According to the above-mentioned interlocking device 40, a position in which the airbag 30 is inflated and deployed can be securely matched with the moving direction D of the rider M with a simple configuration (see Fig. 9).

Besides, as the interlocking device 40 is configured by the operating part 12p provided to the steering unit ST and the engaging part 57 which is provided on the retainer 50 and which engages with the operating part 12p, the position in which the airbag 30 is inflated and deployed can be matched with the moving direction D of the rider M with simpler configuration.

Further, as the engaging part 57 is only protruded toward the operating part 12p to engage therewith when the airbag 30 is inflated and deployed, the steering unit ST and the retainer 50 of the airbag 30 are interlocked only when required. Accordingly, an unnecessary motion of the retainer 50 can be prevented.

Furthermore, as the engaging part 57 is protruded toward the operating part 12p by internal pressure in the body 51 of the retainer raised when the airbag 30 is inflated and deployed, the engaging part 57 can be protruded utilizing the inflation and deployment of the airbag 30. Accordingly, there is no need for means for protruding the engaging part 57 to be separately prepared, and the increase of the number of parts can be inhibited.

Furthermore, as the operating part 12p is configured as a projecting portion provided on the top bridge 12t forming a part of the steering unit ST, the projecting portion has only to be provided to the top bridge 12t, and intricate working for the operating part is not required.

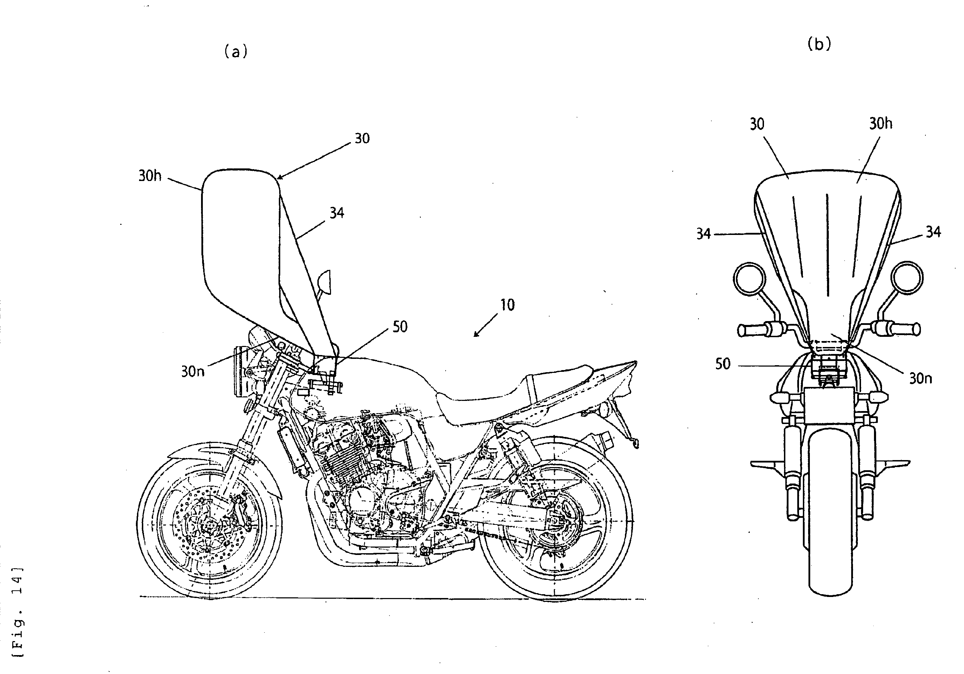

Figs. 14 show a saddle-ride type vehicle using another embodiment of airbag. Fig. 14(a) is a side view, and Fig. 14(b) shows the vehicle viewed from the back.

This embodiment is different from the above-mentioned embodiment in that a pair of right and left mooring bodies 34 are provided. These mooring bodies couple a part opposite to the head 30h and the vehicle 10 separately from a neck part 30n, and moor the part opposite to the head 30h when the airbag is inflated and deployed. The airbag is otherwise similar to the previously described embodiment.

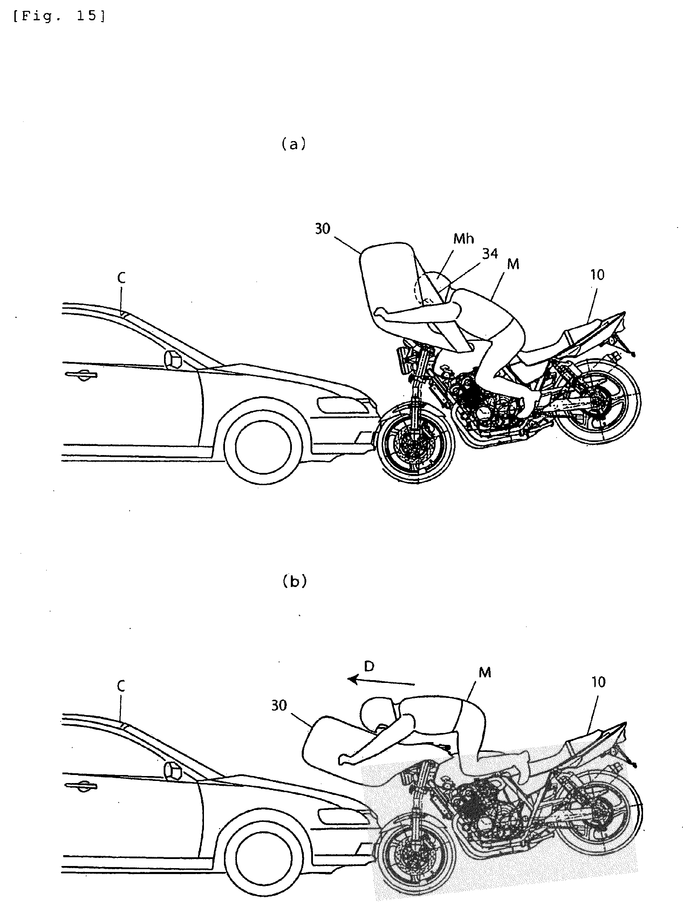

As a result, even if no material body for supporting an airbag 30 (for example, no surface of the impact vehicle C) exists immediately in front of the airbag 30 when inflated and deployed as shown in Fig. 15(a), the airbag 30 receives a rider M and can still absorb a part of the rider's kinetic energy. If the mooring body 34 is not provided, the airbag 30 cannot receive the rider M when no material body for supporting the airbag 30 (for example, no surface of the impact vehicle C) exists immediately in front of the airbag 30 when inflated and deployed as shown in Fig. 15(b).

The airbag 30 receives the rider M as shown in Fig. 15(a) by providing the mooring body 34 and can absorb a part of the rider's kinetic energy.

The mooring body 34 is coupled to the above-mentioned airbag module AM. For example, the mooring body can be directly fixed to an inner face of a side board 51 s of the body 51 of the retainer shown in Figs. 10 for example. The mooring body 34 can be housed together with the airbag 30 in the body 51 of the retainer, with the mooring body folded.

When the mooring body 34 is coupled to the airbag module AM rather than to a body of the vehicle 10 (for example, a body frame 11), the degree of freedom in the design of the other body parts (such as the body frame 11) is enhanced, compared with a case where the mooring body 34 is coupled to the body of the vehicle 10.

The pair of right and left mooring bodies 34 are coupled to both right and left sides of the part opposite to the head 30h of the airbag 30.

As a result, even if no material body for supporting the airbag 30 (for example, no surface of the impact vehicle C) exists immediately in front of the airbag 30 when inflated and deployed, the airbag 30 receives the rider M and can absorb a part of the rider's kinetic energy.

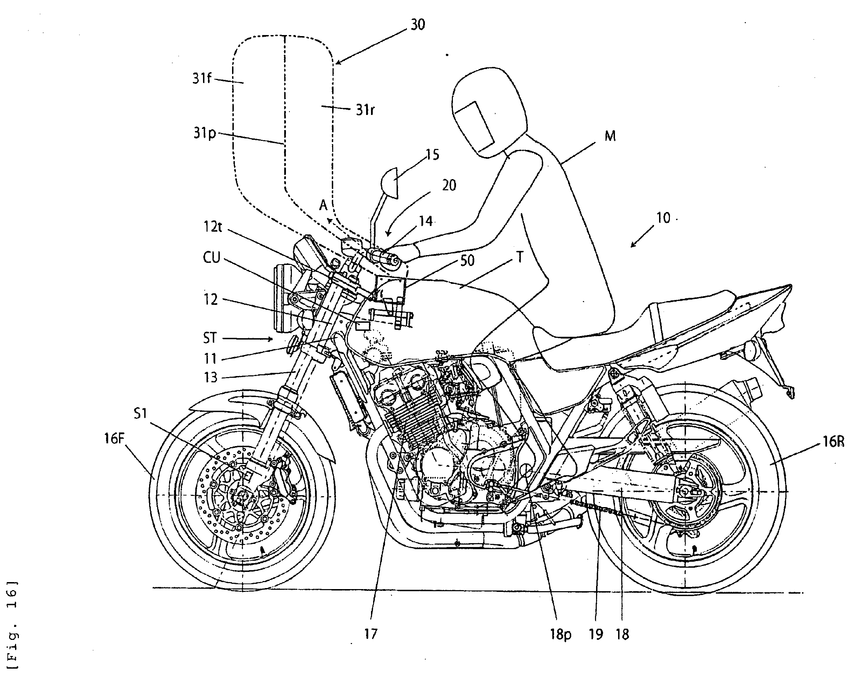

Fig. 16 is a side view showing a saddle-ride type vehicle using a further embodiment of the airbag.

This embodiment is different from the above-mentioned embodiments in that the inside of an airbag 30 is divided into plural expansion chambers 31f, 31r in a longitudinal direction of a vehicle 10, which chambers have different internal pressures when the airbag is inflated and deployed. It is otherwise similar. A reference numeral 31 p denotes a partition that divides the inside of the airbag 30 into front and rear expansion chambers 31f, 31r. The airbag 30 shown in Fig. 16 is divided in two in the longitudinal direction; however, the airbag can be also divided into three or more.

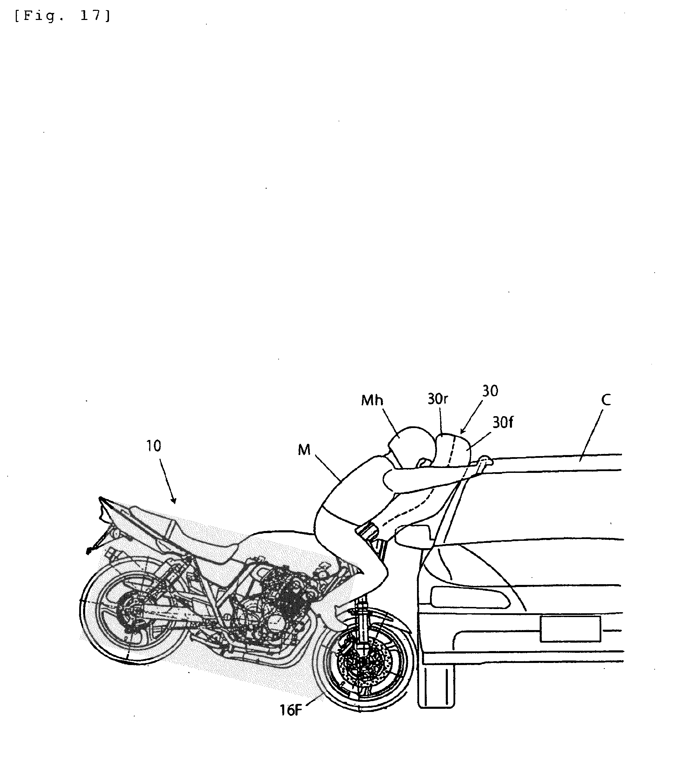

As the inside of the airbag 30 is divided into plural expansion chambers 31f, 31r in the longitudinal direction of the vehicle 10 and internal pressure in the expansion chambers 31f, 31r when inflated and deployed is different, the expansion chamber with a higher internal pressure (for example, 31f) is made to function as an expansion chamber having enough hardness to support the airbag 30 in contact with an object of collision (for example, an impact vehicle C). At the same time, the expansion chamber having a lower internal pressure (for example, 31r) can be made to function as an expansion chamber having enough softness to acquire buffer action in contact with a rider M as shown in Fig. 17 for example.

Thus, according to the airbag 30 in this embodiment, both sufficient hardness and sufficient softness to act as a buffer between the object of collision C and the rider M can be acquired.

As for the internal pressure of the plural expansion chambers 31f, 31r, the internal pressure of the rearmost expansion chamber 31r is made lower, compared with the internal pressure of the front expansion chamber 31f.

As a result, the front expansion chamber 31f, which comes into contact with the object of collision C, can be configured as an expansion chamber having hardness and shape holding capability suitable for contacting the object of collision C by relatively hardening the front expansion chamber, compared with the rearmost expansion chamber 31r which the rider M comes into contact with. At the same time, the rearmost expansion chamber 31r which the rider M comes into contact with can be configured as an expansion chamber having softness suitable for coming into contact with the rider M by relatively softening the rearmost expansion chamber, compared with the front expansion chamber 31f which contacts the object of collision C.

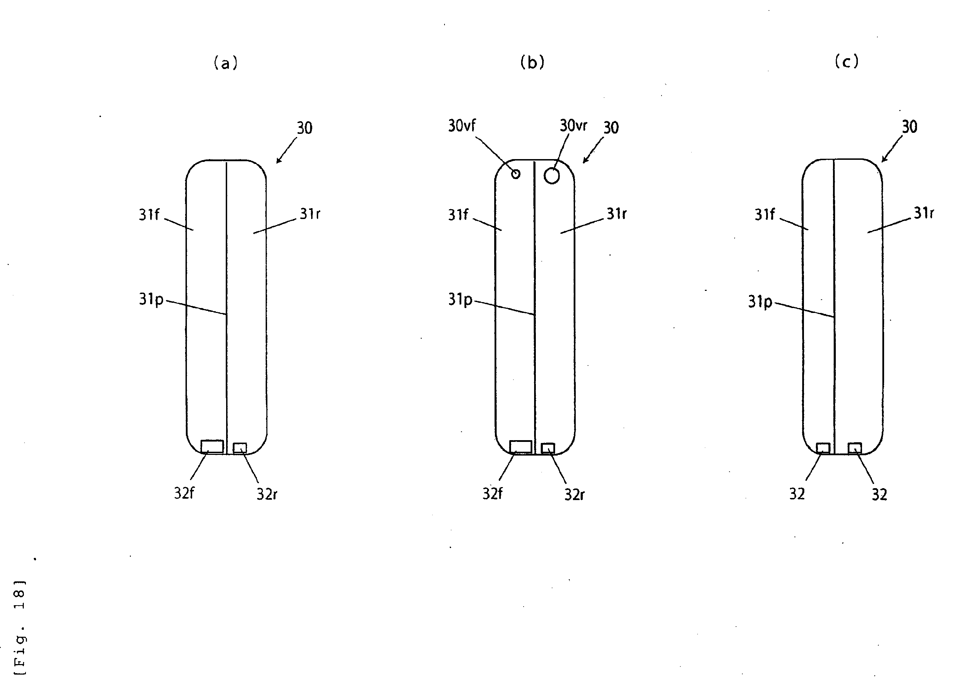

Figs. 18(a) to 18(c) are explanatory drawings showing devices for making the internal pressure of the plural expansion chambers 31f, 31r different.

The internal pressure of each of the plural expansion chambers 31f, 31r can be differentiated by providing inflators 32f, 32r with differing outputs in the expansion chambers 31f, 31r, and inflating and deploying the plural expansion chambers 31f, 31r by the respective inflators 32f, 32r as shown in Fig. 18(a). In this case, the internal pressure of the rearmost expansion chamber 31r can be reduced, compared with the internal pressure of the front expansion chamber 31f, by reducing the output of the inflator 32r for inflating the rearmost expansion chamber 31r, compared with the output of the inflator 32f for inflating the front expansion chamber 31f.

As a result, the internal pressure of the expansion chambers 31f, 31r can be differentiated with a simple configuration, by providing inflators 32f, 32r which are different in output.

The inflators 32f, 32r with different outputs can be also arranged in a direction of vehicle width as shown in Fig. 11. In that case, the partition 31 p is arranged in a state in which the partition is shifted by 90 degrees for example in the body 51 of the retainer, as shown by a broken line in Fig. 11.

Further, the internal pressure of the plural expansion chambers 31f, 31r can be differentiated by providing vent holes 30vf, 30vr with different opening areas in the plural expansion chambers 31f, 31r, as shown in Fig. 18(b), and differentiating the relieved quantity of gas from the plural expansion chambers 31f, 31r during inflation and deployment. In this case, the internal pressure of the rearmost expansion chamber 31r can be reduced, compared with the internal pressure of the front expansion chamber 31f, by increasing the area of the opening of the vent hole 30vr provided in the rearmost expansion chamber 31r, compared with the area of the opening of the vent hole 30vf provided in the front expansion chamber 31f.

As a result, the internal pressure of the expansion chambers 31f, 31r can be differentiated with a simple configuration, in that vent holes 30vf, 30vr of differing areas are provided in the plural expansion chambers 31f, 31r. In this case, the output of the inflators for inflating the plural expansion chambers 31f, 31r can be also made similar; alternatively, as shown in Fig. 18(b), the output of the inflator 32r for inflating the rearmost expansion chamber 31r can also be reduced, compared with the output of the inflator 32f for inflating the front expansion chamber 31f.

Further, the internal pressure of the plural expansion chambers 31f, 31r can be differentiated by differentiating the volume of the plural expansion chambers 31f, 31 as shown in Fig. 18(c), and providing the inflators 32 having the same output to each expansion chamber 31f, 31r. In this case, the internal pressure of the rearmost expansion chamber 31r can be reduced, compared with the internal pressure of the front expansion chamber 31f, by increasing the volume of the rearmost expansion chamber 31r, compared with the volume of the front expansion chamber 31f.

As a result, the internal pressure of the expansion chambers 31f, 31r can be differentiated without the need to provide inflators having different outputs.

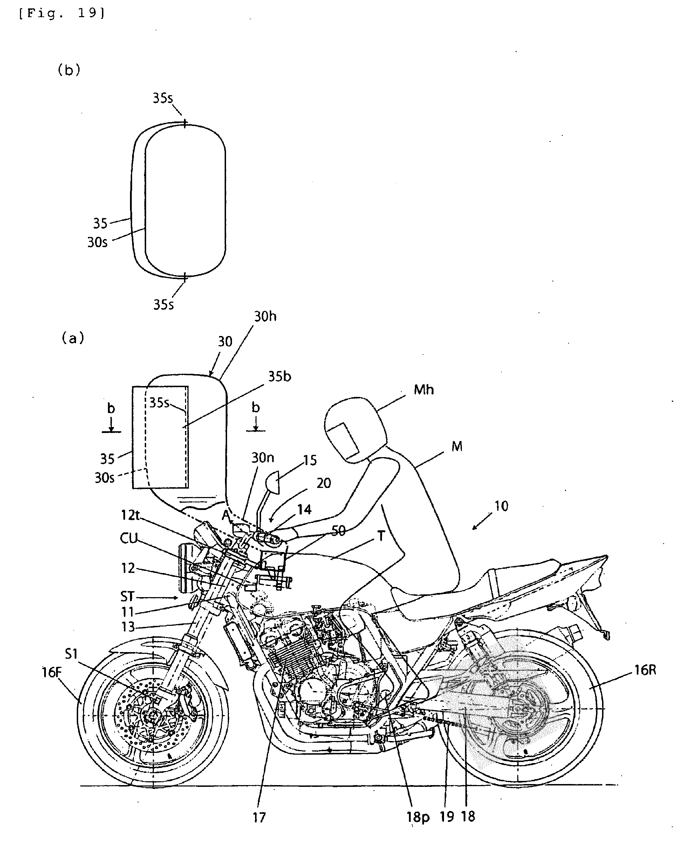

Fig. 19(a) is a side view showing a saddle-ride type vehicle using a further embodiment and Fig. 19(b) is a sectional view viewed along a line b-b in Fig. 19(a).

This embodiment differs from the above-mentioned embodiments in that a protective sheet 35 for protecting a surface 30s is provided to an airbag 30, and that the protective sheet is loose compared with the surface 30s of the airbag 30.

As a result, as the protective sheet 35 for protecting the surface 30s of the airbag 30 is provided with the protective sheet loosened (compared with the surface 30s of the airbag 30), little or no tension is caused on the protective sheet 35 when the airbag 30 is inflated and deployed.

Accordingly, even if a sharp body hits the protective sheet 35, the protective sheet 35 is hardly damaged. When the sharp body (not shown) hits the airbag 30, it hits via the protective sheet 35 and as the protective sheet 35 is hardly damaged, external force applied to the airbag 30 by the sharp body acts on the airbag with the external force buffered by the protective sheet 35. Accordingly, the airbag 30 is also hardly damaged.

Accordingly, even if the airbag 30 is pressed on the side (or other part) of an impact vehicle C during a collision with the impact vehicle C as shown in Fig. 7 for example, the airbag 30 is hardly damaged and a function of the airbag for protecting a rider M is secured.

As is clear from the above-mentioned description, according to this embodiment, the airbag can be effectively protected without using a very strong sheet, compared with a case where the protective sheet is closely provided to the surface of the airbag 30.

Accordingly, according to this embodiment, as the airbag can be protected without requiring a thick sheet and a firm stitch, a smaller airbag system suitable for a saddle-ride type vehicle 10 can be provided.

If only the protective sheet 35 is a sheet having strength at which the above-mentioned protecting function can be fulfilled, a sheet made of arbitrary material can be adopted. For example, well-known foundation cloth forming the airbag 30 can be used for the protective sheet 35. However, if the protective sheet 35 having higher tolerance to incision is used, the airbag system can be reduced in weight and size.

As for means for providing the protective sheet 35 to the surface 30s of the airbag 30, the protective sheet 35 has only to be able to be provided with the protective sheet loosened and suitable means can be adopted.

For example, as shown in Figs. 19, both sides 35b of the protective sheet 35 can be joined to the airbag 30 (a joined part is shown by a reference sign 35s).

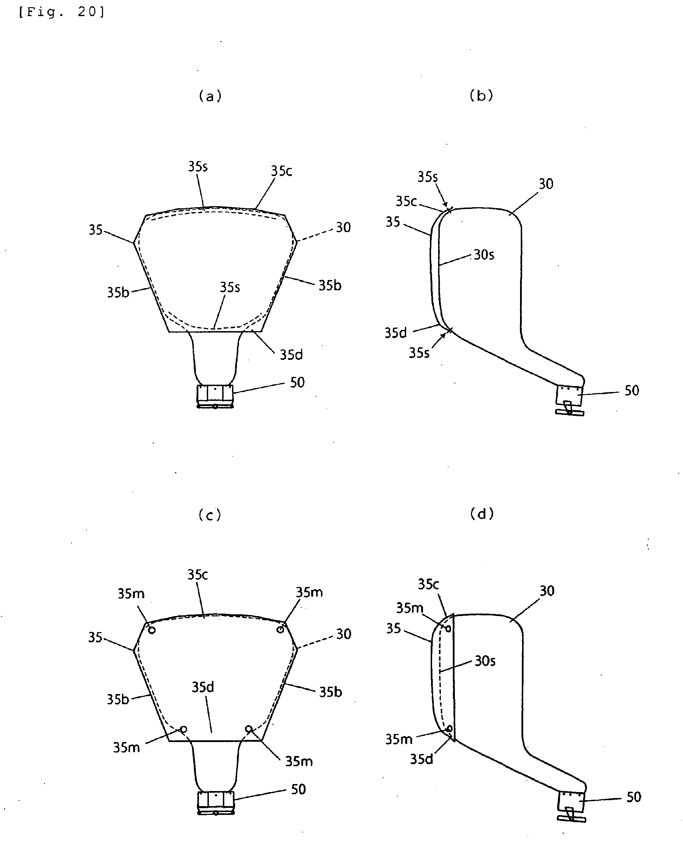

As shown in Figs. 20(a) and 20(b), an upper edge 35c and a lower edge 35d of the protective sheet 35 can be joined to the airbag 30.

Further, as shown in Figs. 20(c) and 20(d), the periphery of the protective sheet 35 can be connected to the airbag 30 at particular locations (at four corners in a case shown in Figs. 20(c) and 20(d)) of the periphery of the protective sheet 35. A connected part is shown by a reference sign 35m. The connected part 35m can be also connected by joining, and can be also connected by welding and adhesion.

When the periphery of the protective sheet 35 is connected to the airbag 30 at particular locations as described above, the bulk of the connected part is reduced and housing size can be minimized.

Welding and adhesion can be used in place of joining 35s.

Even if the above-mentioned any connecting means is used, the protective sheet 35 is provided to the surface 30s of the airbag 30 with the protective sheet loosened by connecting the airbag 30 and the protective sheet 35 in connected parts so that the protective sheet 35 connected to the airbag in the connected parts is longer than the airbag, compared with the distance of the surface 30s of the airbag.

The protective sheet 35 can prevent the airbag 30 from being torn, reducing the housing size of the airbag 30 and the protective sheet 35 by providing the protective sheet only on the front side of the airbag 30 as shown in Figs. 19.

Various embodiments of the present invention have been described. However, the present invention is not limited to the above-mentioned embodiments and can be suitably embodied in a range of the essential points of the present invention. The above-mentioned embodiments may be also combined.

## Claims

1. An airbag system (20) for a saddle-ride type vehicle (10) comprising an airbag (30) to be inflated and deployed upward from the vehicle in front of a rider (M),
wherein the airbag (30) is provided with a part opposite to a head (30h) opposite to a rider's head (Mh) when inflated and deployed, and a neck part (30n) which rises upward from the vehicle (10) and toward the part opposite to the head (30h), wherein the width (W1) of the neck part (30n) is smaller than the width (W2) of the part opposite to the head (30h), and wherein the neck part (30n) has a necking (30c) curved inside in the direction of vehicle width;
**characterized in that** an upper part (30h2) of the part opposite to the head (30h) is wider than a lower part (30h1) of the part opposite to the head (30h) when the airbag (30) is inflated and deployed, and **in that** the part opposite to the head (30h) is arranged so that it is entirely located in front of the handlebar (14) provided on the vehicle (10) when the airbag (30) is inflated and deployed.

2. The airbag system according to Claim 1, wherein the part opposite to the head (30h) is located above a handlebar (14) provided on the vehicle (10) when the airbag (30) is inflated and deployed.

3. The airbag system according to Claim 1 or 2, further comprising:
a pair of right and left mooring bodies (34) that couple the part opposite to the head (30h) to the vehicle (10) separately from the neck part (30n) and moor the part opposite to the head (30h) when the airbag (30) is inflated and deployed.

4. The airbag system according to Claim 3, wherein the mooring bodies (34) are coupled to an airbag module (50) mounted in the vehicle (10) which houses the airbag (30) and an inflator (32) that inflates and deploys the airbag (30), on both sides of the vehicle.

5. The airbag system according to Claim 3 or 4, wherein the pair of right and left mooring bodies (34) is coupled to the right and left sides of the part opposite to the head (30h).

6. A saddle-ride type vehicle (10) with an airbag system (20) as claimed in any preceding claim.

## Patentansprüche

1. Airbagsystem (20) für ein Fahrzeug (10), das mit Sattel gefahren wird, umfassend einen Airbag (30), welcher aufgeblasen und vom Fahrzeug aus nach oben vor einem Fahrer (M) eingesetzt wird,
wobei der Airbag (30) mit einem Teil gegenüber dem Kopf (30h), welcher gegenüber einem Fahrerkopf (Mh) liegt, wenn aufgeblasen und eingesetzt, und einem Halsteil (30n) vorgesehen ist, welcher sich nach oben vom Fahrzeug (10) und sich in Richtung des Teils gegenüber dem Kopf (30h) erhebt, wobei die Breite (W1) des Halsteils (30n) kleiner ist als die Breite (W2) des Teils gegenüber dem Kopf (30h) und wobei der Halsteil (30n) eine Einschnürung (30c) aufweist, die nach Innen in die Richtung der Fahrzeugbreite geschwungen ist;
**dadurch gekennzeichnet, dass** ein oberer Teil (30h2) des Teils gegenüber dem Kopf (30h) breiter ist als ein unterer Teil (30h1) des Teils gegenüber dem Kopf (30h), wenn der Airbag (30) aufgeblasen und eingesetzt ist, und dass der Teil gegenüber dem Kopf (30h) so positioniert ist, dass er zur Gänze vor der Lenkstange (14), die auf dem Fahrzeug (10) vorgesehen ist, angeordnet ist, wenn der Airbag (30) aufgeblasen und eingesetzt ist.

2. Airbagsystem nach Anspruch 1, wobei der Teil gegenüber dem Kopf (30h) über einer Lenkstange (14), welche auf dem Fahrzeug (10) vorgesehen ist, angeordnet ist, wenn der Airbag (30) aufgeblasen und eingesetzt ist.

3. Airbagsystem nach Anspruch 1 oder 2, des Weiteren umfassend:
ein Paar von rechten und linken Verankerungskörpern (34), welche den Teil gegenüber dem Kopf (30h) mit dem Fahrzeug (10) getrennt vom Halsteil (30n) verbinden und den Teil gegenüber dem Kopf (30h) verankern, wenn der Airbag (30) aufgeblasen und eingesetzt ist.

4. Airbagsystem nach Anspruch 3, wobei die Verankerungskörper (34) mit einem im Fahrzeug (10) angebrachten Airbag-Modul (50), welches den Airbag (30) und einen Gasgenerator (32), der den Airbag (30) aufbläst und einsetzt, aufnimmt, auf beiden Seiten des Fahrzeugs verbunden sind.

5. Airbagsystem nach Anspruch 3 oder 4, wobei das Paar von rechten und linken Verankerungskörpern (34) mit der rechten und linken Seite des Teils gegenüber dem Kopf (30h) verbunden ist.

6. Fahrzeug (10), das mit Sattel gefahren wird, mit einem Airbagsystem (20) nach jedem beliebigen vorangehenden Anspruch.

## Revendications

1. Système de coussin gonflable (20) pour un véhicule de type à selle (10) comprenant un coussin gonflable (30) devant être gonflé et déployé vers le haut à partir du véhicule devant un conducteur (M),
dans lequel le coussin gonflable (30) est muni d'une partie en face de la tête (30h), en face de la tête d'un conducteur (Mh), quand gonflé et déployé, et une partie formant col (30n) qui s'élève vers le haut à partir du véhicule (10) et vers la partie en face de la tête (30h), dans lequel la largeur (W1) de la partie formant col (30n) est plus petite que la largeur (W2) de la partie en face de la tête (30h), et dans lequel la partie formant col (30n) a une rétreinte (30c) courbée à l'intérieur dans le sens de la largeur de véhicule ;
**caractérisé en ce qu'**une partie supérieure (30h2) de la partie en face de la tête (30h) est plus large qu'une partie inférieure (30h1) de la partie en face de la tête (30h) quand le coussin gonflable (30) est gonflé et déployé, et **en ce que** la partie en face de la tête (30h) est agencée de sorte qu'elle est entièrement située devant le guidon (14) prévu sur le véhicule (10) quand le coussin gonflable (30) est gonflé et déployé.

2. Système de coussin gonflable selon la revendication 1, dans lequel la partie en face de la tête (30h) est située au-dessus d'un guidon (14) prévu sur le véhicule (10) quand le coussin gonflable (30) est gonflé et déployé.

3. Système de coussin gonflable selon la revendication 1 ou 2, comprenant en outre :
un couple de corps d'amarrage de droite et de gauche (34) qui relient la partie en face de la tête (30h) au véhicule (10) séparément de la partie formant col (30n) et amarrent la partie en face de la tête (30h) quand le coussin gonflable (30) est gonflé et déployé.

4. Système de coussin gonflable selon la revendication 3, dans lequel les corps d'amarrage (34) sont reliés à un module de coussin gonflable (50) monté dans le véhicule (10) qui loge le coussin gonflable (30) et un gonfleur (32) qui gonfle et déploie le coussin gonflable (30), des deux côtés du véhicule.

5. Système de coussin gonflable selon la revendication 3 ou 4, dans lequel le couple de corps d'amarrage de droite et de gauche (34) est relié aux côtés de droite et de gauche de la partie en face de la tête (30h).

6. Véhicule de type à monture à selle (10) avec un système de coussin gonflable (20) tel que revendiqué dans n'importe quelle revendication précédente.
